# EUROPEAN PATENT APPLICATION

(11) **EP 0 796 001 A2**
(43) Date of publication of application: **17.09.1997**
(21) Application number: 97301363.4
(22) Date of filing: 28.02.1997
(51) Int. Cl.: H04N 1/32

(54) **Data processing apparatus which determines transmission destination of image data**

(30) Priority: 11.03.1996 JP 53181/96
(71) Applicant: KABUSHIKI KAISHA TOSHIBA, Kawasaki-shi, Kanagawa-ken 210 (JP)
(72) Inventor: Tanaka, Rie, 1-1 Shibaura 1-chome,Minato-ku Tokyo 105 (JP)
(74) Representative: Waldren, Robin Michael

(57) **Abstract**

A data processing apparatus includes a function (31, 31a) of storing a condition to specify received data into a plurality of types, and a condition to specify a plurality of transmission destinations corresponding to the plurality of types, a function (31, 31a) of receiving data from an external device, specifying the type of the received data on the basis of the condition, and determining a transmission destination on the basis of the condition in accordance with the specified type, and a function (40, 41) of transmitting the received data to the transmission destination.

## Description

The present invention relates to a composite data processing system capable of processing many types of data and, more particularly, to a multifunction image forming apparatus having an image forming function.

In recent years, composite data processing systems capable of processing many types of data such as code data (e.g., numerical data and characters) and image data (still and moving images) have appeared. In this specification, the composite data processing system is assumed to be a multifunction image forming apparatus having an image forming function.

A multifunction digital copying machine as a multifunction image forming apparatus comprises a large number of various input and output units. Input data can be stored in an internal or external memory of the copying machine, and printed out. Further, data managed by the multifunction digital copying machine can be extracted by a personal computer connected to this multifunction digital copying machine. In addition, since the internal or external memory of the multifunction digital copying machine stores not only image data to be printed out but also various data such as code data and image data, the data amount stored in the memory is very large.

As described above, since the multifunction digital copying machine processes a large amount of various data, a large load is imposed on the user in managing data files. For example, when the user retrieves data files, it is very difficult to search a necessary file from an enormous amount of data without any clue. In addition, while waiting for input of a necessary data file to the multifunction digital copying machine, the user must inquire whether the file is input to the copying machine. With the advance in sharing data by networking such multifunction digital copying machines, data management becomes more and more difficult.

The present invention has as its object to provide a composite data processing system and a multifunction image forming apparatus capable of easily managing data.

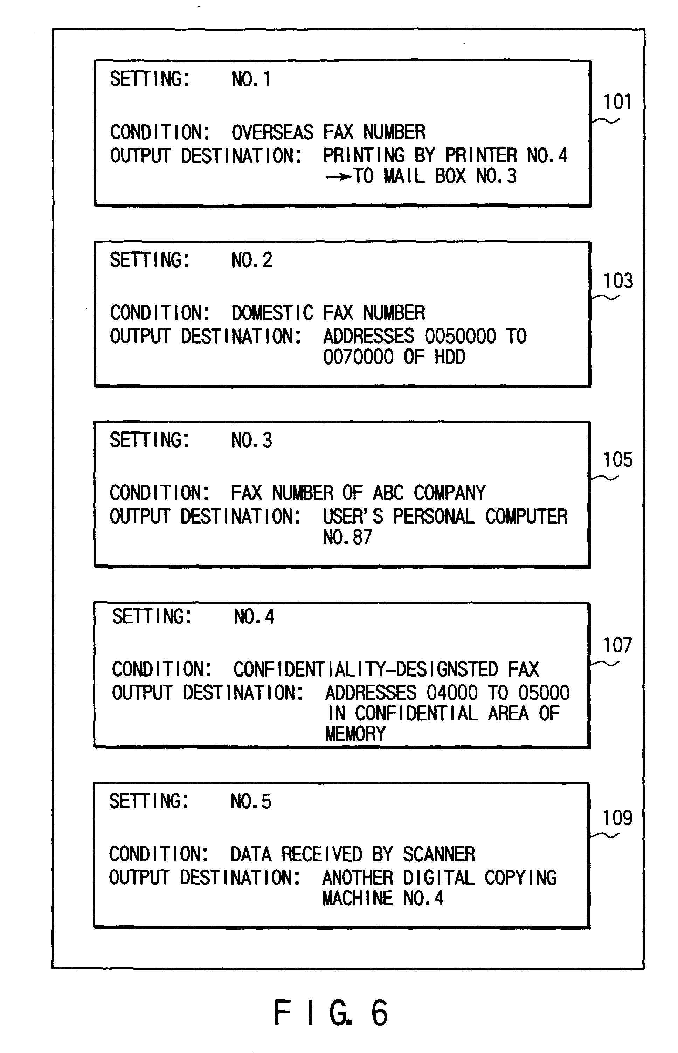

According to the present invention, there is provided a data processing apparatus comprising means (13, 39) for receiving data from an external device, means (31a, FIG. 6) for setting a first condition to specify the data received by the receiving means into a plurality of types, means (31a, FIG. 6) for setting a second condition to specify a plurality of transmission destinations corresponding to the plurality of types, first specifying means (31, 31a) for specifying a type of the data on the basis of the first condition, second specifying means (31, 31a) for specifying a transmission destination on the basis of the second condition in accordance with the type specified by the first specifying means, and means (40, 41) for transmitting the received data in accordance with the transmission destination specified by the second specifying means.

With the above arrangement, the present invention has the following function and advantage. That is, when the composite data processing apparatus receives image data from, e.g., a FAX or external device, the apparatus determines the type of image data from the attribute of the image data on the basis of the stored conditions. If this image data is specific image data such as "overseas FAX communication", "emergency data", or "confidential document", in the present invention, the type of image data (though data is not limited to image data) is automatically recognized on the apparatus side, and a transfer destination set in advance is specified in accordance with the data type to transfer the image data, instead of transferring the image data to a predetermined portion after the user confirms the data contents, unlike in a conventional case.

With this processing, cumbersome processing such as discrimination of the type of image data or decision of a transfer destination, which imposes a load on the user in the conventional apparatus, can be omitted. As a result, the load on the user about operations of received data can be greatly reduced.

This invention can be more fully understood from the following detailed description when taken in conjunction with the accompanying drawings, in which:
FIG. 1 is a schematic view showing the arrangement of a multifunction digital copying machine according to an embodiment of the present invention;
FIG. 2 is a schematic view showing the control system of the multifunction digital copying machine;
FIG. 3 is a table showing the data input means of the multifunction digital copying machine;
FIG. 4 is a view showing an example of setting contents for setting identification conditions;
FIG. 5 is a view showing an example of setting contents for setting an output or storage destination;
FIG. 6 is a view showing an example of confirmation contents for confirming settings of the identification conditions and the output or storage destination;
FIG. 7 is a flow chart for explaining settings of the identification conditions;
FIG. 8 is a flow chart for explaining processing of overseas FAX data;
FIG. 9 is a flow chart for explaining processing of emergency FAX data; and
FIG. 10 is a flow chart for explaining processing of FAX data as a confidential document.

An embodiment of the present invention will be described below with reference to the accompanying drawing.

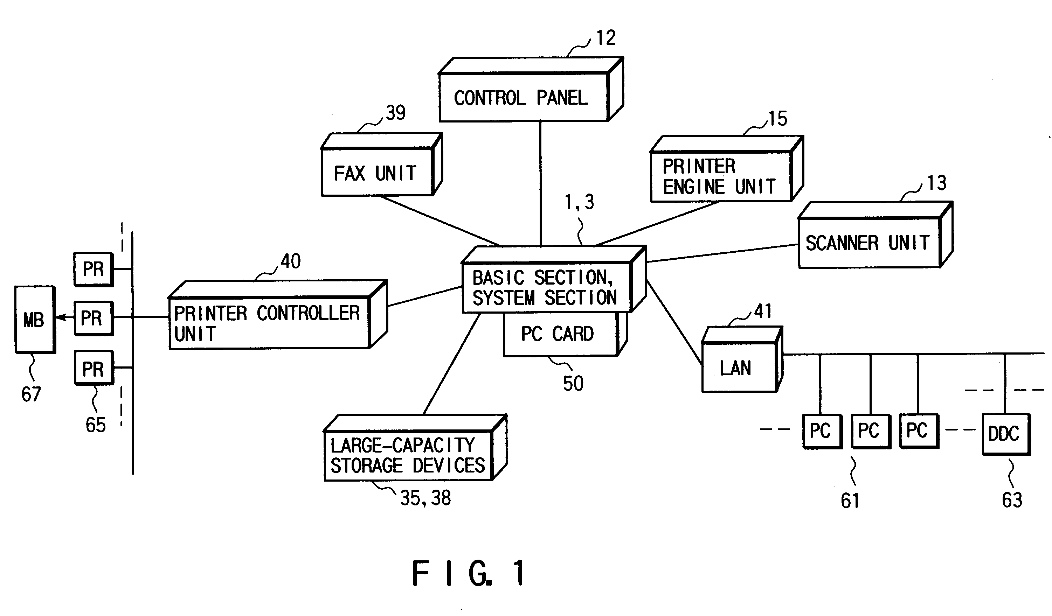

FIG. 1 is a schematic view showing the arrangement of a multifunction digital copying machine according to an embodiment of the present invention. This embodiment exemplifies a multifunction digital copying machine having FAX and printer functions.

Basis section 1 and system section 3 of this multifunction digital copying machine comprise a PC card unit 50 which receives a PC card and reads data recorded on the received PC card.

A control panel 12, a scanner unit 13, a printer engine unit 15, a FAX unit 39 for receiving compressed bitmap data through a public line, a printer controller unit 40 for converting code data transmitted from various types of terminals into bitmap data, large-capacity storage devices (e.g., a hard disk and an optical disk) 35 and 38, and the like are connected to the basic and system sections 1 and 3. A plurality of printers 65 and a mail box 67 are connected to the printer controller unit 40. A plurality of external devices (not shown) are connected to the basic and system sections 1 and 3 through a LAN 41.

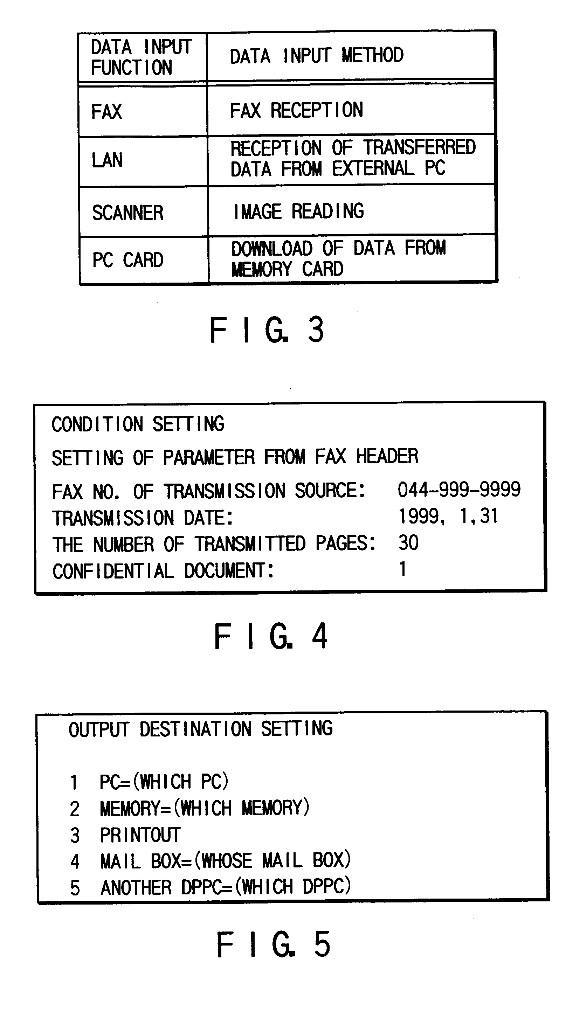

As shown in FIG. 3, this multifunction digital copying machine externally receives various data with the scanner unit 13, the FAX unit 39, and the PC card unit 50, or through the LAN 41. The various data received in this manner are stored in a page memory section 2, the large-capacity storage devices 35 and 38, or the like in the multifunction digital copying machine.

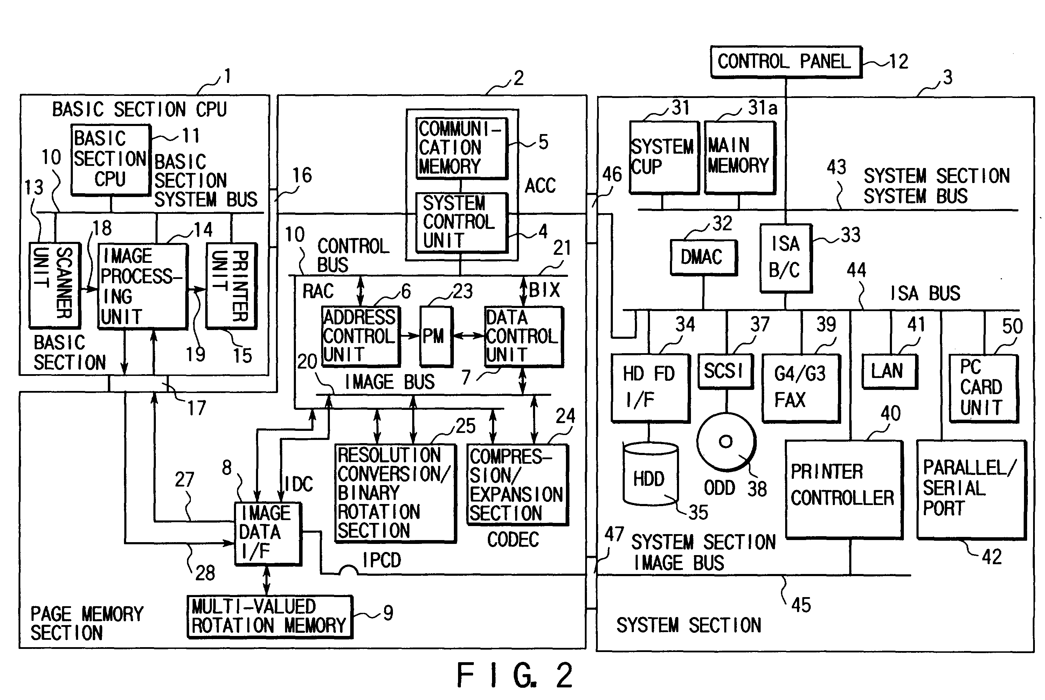

FIG. 2 is a schematic view showing the control system of the multifunction digital copying machine.

The control system of the multifunction digital copying machine is constituted by mainly three blocks, which are the basic section 1, the page memory section 2, and the system section 3.

The basic section 1 is connected to the page memory section 2 through a basic section system interface 16 for exchanging control data, and a basic section image interface 17 for exchanging image data. The page memory section 2 is connected to the system section 3 through a system section system interface 46 for exchanging control data, and a system section image interface 47 for exchanging image data. The basic section 1 and the system section 3 are not directly connected to each other, and must exchange control data and image data through the page memory section 2.

The internal arrangements of the three systems will be schematically described.

In the basic section 1, a basic section CPU 11 as the control center of the multifunction digital copying machine, the scanner unit 13, an image processing unit 14, and the printer engine unit 15 are connected to each other through a basic section system bus 10. The basic section CPU 11 controls respective units in the basic section 1 and the respective units of the page memory section 2. The scanner unit 13 is connected to the printer engine unit 15 through the image processing unit 14.

The scanner unit 13 in the basic section 1 comprises a CCD line sensor (not shown) constituted by a plurality of light-receiving elements arranged in a line. The scanner unit 13 reads an image of an original placed on an original table (not shown) in units of lines in accordance with an instruction from the basic section CPU 11, and converts the density of the image into 8-bit digital data. Thereafter, the scanner unit 13 outputs the 8-bit digital data as time series digital data to the image processing unit 14 through a scanner interface 18, together with a synchronization signal.

The image processing unit 14 smooths (removes) noise mixed in image reading, and sharpens an edge which blurs in smoothing. The image processing unit 14 also performs masking/trimming processing and enlargement/reduction processing. The image processing unit 14 further converts the image data of 8 bits per pixel read by the scanner unit 13 into a designated gradation level. The gradation-converted image data is sent to the printer engine unit 15 as image data of 4 bits per pixel the number of bits of which is equal to that of the printer engine unit 15, or to the page memory section 2 through the basic section image interface 17 and a scanner data bus 27. The nonlinearity of the input/output characteristics of the printer engine unit 15 is corrected at the same time when gradation processing is performed using a dot matrix method.

The page memory section 2 realizes a memory copy function by receiving and storing the image data from the basic section 1, and then transferring again the stored image data to the basic section 1. The page memory section 2 controls communication of a control signal between the basic section CPU 11 in the basic section 1 and a system CPU 31 in the system section 3, and controls access from the basic section 1 and the system section 3 to a page memory 23.

The page memory section 2 is constituted by a system control unit 4 incorporating a communication memory 5 therein, the page memory 23 for temporarily storing image data, an address control unit 6 for generating an address for the page memory 23, an image bus 20 for transferring data between respective devices in the page memory section 2, a control bus 21 for transferring a control signal between each device in the page memory section 2 and the system control unit 4, a data control unit 7 for controlling data transfer between the page memory 23 and another device through the image bus 20, and an image data I/F 8 for interfacing image data when transferring the image data between the page memory section 2 and the basic section 1 through the basic section image interface 17.

The page memory section 2 further comprises a resolution conversion/binary rotation means 25, a compression/expansion means 24, and a multi-valued rotation memory 9. When image data is to be transmitted to a given device having a different resolution, the resolution conversion/binary rotation means 25 converts, image data to have the resolution of the given device. The means 25 converts image data received from a device having a different resolution to have the resolution of the printer engine unit 15 of the basic section 1, and executes 90°-rotation processing with respect to binary image data. The compression/expansion means 24 compresses input image data for a device which transmits or stores image data upon compression, like facsimile transmission or optical disk storage, and expands the compressed image data in order to visualize the image data through the printer engine unit 15. The multi-valued rotation memory 9 is connected to the image data I/F 8 and used when image data is output upon rotation through 90° or -90° in outputting the image data from the printer engine unit 15. The respective means in the page memory section 2 will be described in detail later.

The system section 3 is constituted by the system CPU 31 for controlling respective devices in the system section 3 through a system section system bus 43, a main memory 31a used by the system CPU 31, a general-purpose ISA bus 44, an ISA bus controller (ISA B/C) 33 for interfacing the system section system bus 43 and the ISA bus 44, a DMA controller (DMAC) 32 for controlling data transfer on the ISA bus 44, the HDD (Hard Disk Drive) 35 connected to the ISA bus 44 to electronically store image data, an HD·FD interface (HD·FD I/F) 34 serving as an interface for the HDD 35, the ODD (Optical Disk Device) 38 connected to the ISA bus 44 to electronically store image data, a SCSI interface 37 serving as an interface for the ODD 38, the LAN 41 for realizing the LAN function, the printer controller unit 40 for realizing the printer function, the G3/G4 FAX unit 39 having the G3/G4 FAX control function, parallel and serial ports 42 for externally exchanging data, and a system section image bus 45 for outputting image data from the printer controller unit 40 to the page memory section 2 through the system section image interface 47. Personal computers 61 for a plurality of users, a plurality of other digital data copying machines DDC 63, and the like are connected to the LAN 41.

A hard disk HD incorporated in the HDD 35 stores, as a file, compressed image data of one document composed of one or a plurality of compressed pages, which image data is managed by retrieval data for retrieving the document.

The system section system bus 43 is connected to the control panel 12 constituted by a keyboard through which an instruction is sent to the system section 3, and a display.

The point of the present invention will be described below.

As described above, since the multifunction digital copying machine has a plurality of interfaces, the multifunction digital copying machine has many input means and many types of data files, as shown in FIG. 3. A data file input through each input means is printed out or stored in each storage unit under the management of the multifunction digital copying machine.

In the present invention, an output or storage destination for received data is automatically determined in accordance with the type of data. To realize this, first, identification conditions for identifying data received by the multifunction digital copying machine are set. Further, the output or storage destination of the data identified by the set conditions is designated.

Upon reception of data, this received data is stored in the page memory 23 or the like (first processing). The data stored in the page memory 23 is identified on the basis of the set conditions. When the data corresponds to a given condition, it is transferred to a predetermined output or storage destination designated (second processing). Note that if the identification conditions are not set by the user, the function of identifying the received data and outputting or storing it may be stopped, or certain identification conditions may be made to function to identify the received data and output and store the data.

An example of processing of data received by the FAX unit 39 will be described. In this case, detailed examples of a method of determining the output or storage destination of FAX data on the basis of the FAX number included in the header data of the FAX data will be described.

### (1) Processing of Overseas FAX Data

Of FAX data processed by the FAX unit 39 of the multifunction digital copying machine, FAX data sent overseas will be explained. For example, FAX data sent overseas is set to be transferred to the printer and, upon printing, is discharged to an output destination (e.g., a mail box) assigned to the person in charge. In this case, to utilize the FAX number of a transmission source which is obtained from the header data of FAX data, the country number of Japan is set in advance as an identification condition for received FAX data. The country number of FAX data to be received is checked, and FAX data having a country number which does not coincide with the country number of Japan, i.e., overseas FAX data is discharged to a designated mail box. Alternatively, a specific country number (e.g., U.S.A.) may be set in advance, and only FAX data from the country corresponding to the set country number may be distinguished from other FAX data.

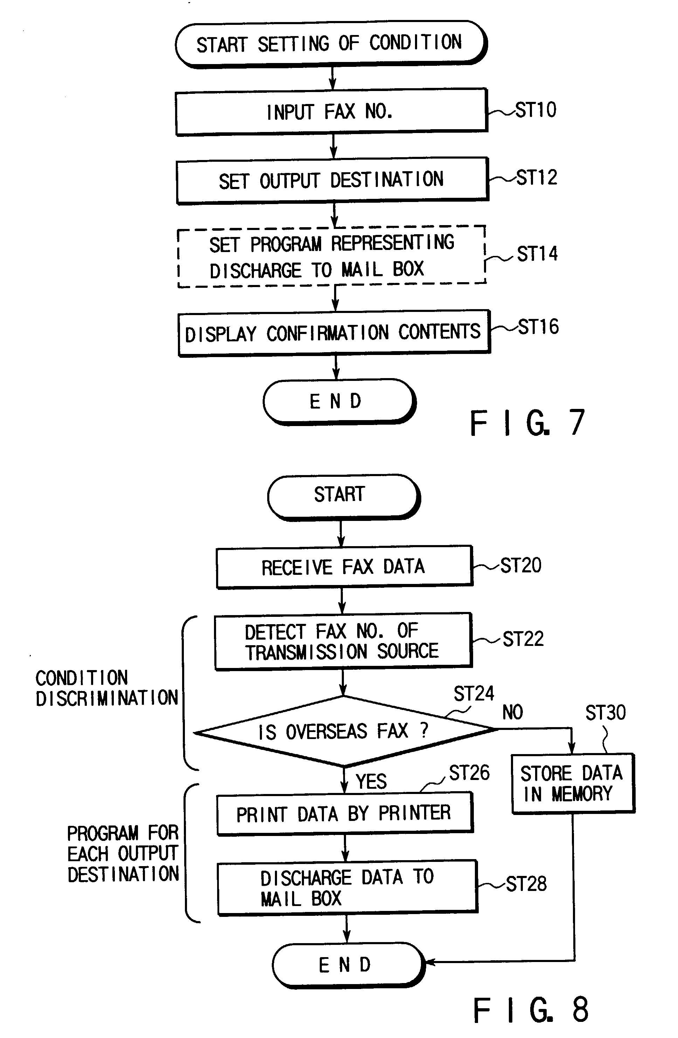

First, a method of setting the identification conditions of data to be received will be explained with reference to a flow chart in FIG. 7.

The identification conditions are set on the control panel 12. FIGS. 4 to 6 are views showing examples of the setting contents of the identification conditions on the control panel 12. When setting of the identification conditions is designated on the control panel 12, the setting contents of the identification conditions are displayed. At this time, the FAX number (country number) is input as the identification condition of FAX data for the display contents shown in FIG. 4 (ST10). Next, the output and storage destinations are set for the display contents shown in FIG. 5 (ST12). The output and storage destinations include a personal computer (a given personal computer is designated), a memory (a given memory is designated), printing-out (a given printer to print out data is designated), a mail box (a given mail box is designated), and another digital copying machine (a given digital copying machine is designated). Assume that the mail box is designated. In this case, a program instructing discharge to the mail box is set (ST14), and the set output destinations are displayed on confirmation contents 101 to 109 shown in FIG. 6 (ST16).

Second, processing of received FAX data will be explained with reference to a flow chart in FIG. 8.

A case wherein overseas FAX data is discharged to the mail box and remaining data is stored in the HDD 35 will be explained. For this purpose, identification conditions for identifying overseas FAX data must be set first. To identify overseas FAX data, there is a method of designating the country number of Japan and identifying FAX data having a country number other than that of Japan as overseas FAX data. The method of setting the identification conditions has been described above, and a description thereof will be omitted.

Upon reception of FAX data (ST20), the FAX number of the transmission source is detected (ST22). Whether the FAX data is an overseas FAX is checked on the basis of the detected FAX number (ST24). That is, it is checked whether the detected FAX number coincides with the country number of Japan. When the country number of the received FAX data does not coincide with the country number of Japan, the FAX data is determined as an overseas FAX (YES in ST24), and is output to the printer and printed (ST26). The printed FAX data is discharged to the mail box (ST28).

This setting is setting No. 1 shown in FIG. 6, in which the condition is the overseas FAX number, and the output destination is the mail box No. 3 (67) to which data is discharged upon being printed out by the printer No. 4 (65).

When the country number of received FAX data coincides with the country number of Japan, it is determined that the FAX data is not an overseas FAX (NO in ST24), and the FAX data is stored in the HDD 35 (ST30). Note that detection of the FAX number of the transmission source and various determinations (data identification) are performed by the system CPU 31.

This setting is setting No. 2 shown in FIG. 6, in which the condition is the domestic FAX number, and the output destination is set to be, e.g., addresses 005000 to 007000 in the storage area of the HDD 35.

### (2) Processing of Emergency Data

Processing of FAX data from a certain partner which the user urgently needs will be explained. In this case, for example, the partner's FAX number is set as the identification condition of received data, the output destination is set to the personal computer of this user, and data not corresponding to the identification condition is set to be stored in the HDD 35. The processing condition and output destination of received data are set on the control panel 12, as in case (1).

This setting is setting No. 3 shown in FIG. 6, in which the condition is, e.g., the FAX number of ABC company, and the output destination is set to the personal computer No. 87 of the user who eagerly wants this FAX.

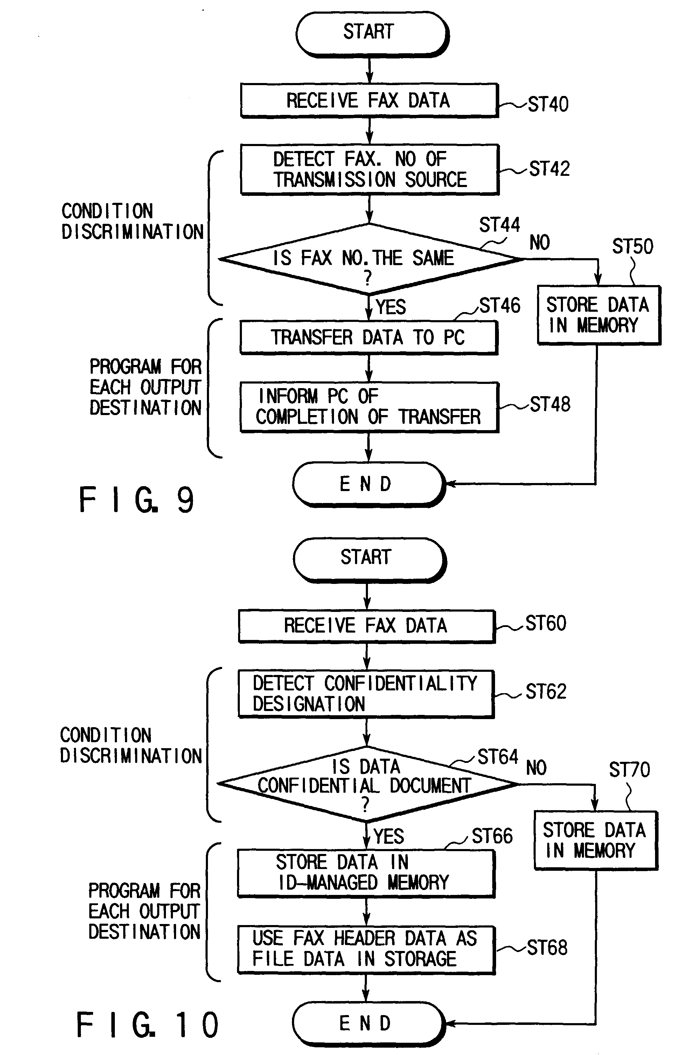

Next, processing of received FAX data will be described with reference to a flow chart in FIG. 9.

As described above, the partner's FAX number is set as the identification number, and a given personal computer 61 of a user is designated as the output designation. Upon reception of FAX data (ST40), the FAX number of the transmission source is detected (ST42). Whether the received FAX data is an emergency FAX is checked on the basis of the detected FAX number (ST44). That is, it is checked whether the detected FAX number coincides with the set FAX number. If YES, the FAX data is determined as an emergency FAX (YES in ST44), and transferred to the designated personal computer (ST46). Upon completion of transfer processing, a transfer end command is sent (ST48) to inform the user of completion of transfer of the FAX data. When the received FAX number does not coincide with the set FAX number, it is determined that the FAX data is not an emergency FAX (NO in ST44), and the FAX data is stored in the HDD 35 (ST50). Note that detection of the FAX number of the transmission source, various determinations (data identification), command transmission, and the like are performed by the system CPU 31.

### (3) Processing of Confidential Document

Processing of a confidential document will be explained. Normally, a highly confidential document is not transmitted as a FAX document which will be seen by many people. However, the confidential document can be transmitted as a FAX document by designating confidentiality to the header data of FAX data and storing the confidentiality-designated FAX data in a memory managed by an ID code. In this case, the confidentiality is designated to the header data of FAX data to be transmitted. This confidentiality designation is set as the identification condition, and the output destination of the FAX data corresponding to this confidentiality designation is set to a memory managed by an ID code. Data not corresponding to the confidentiality designation is stored in the HDD 35. The identification condition and output destination of received data are set on the control panel 12, as in case (1).

This setting is setting No. 4 shown in FIG. 6, in which the condition is a confidentially designated FAX, and the output destination is set to, e.g., addresses 04000 to 05000 in the confidentiality area of a memory.

Next, processing of received FAX data will be explained with reference to a flow chart in FIG. 10.

As described above, the confidentiality designation of the header data of received FAX data is set as the identification condition, and the page memory 23 managed by an ID code is set as the output destination. Upon reception of FAX data (ST60), confidentiality designation is detected from the header data of the FAX data of the transmission source (ST62). If the confidentiality designation is detected, the received FAX data is determined as a confidentiality-designated document (YES in ST64) and stored in the page memory 23 managed by the ID code (ST66), and the header data of the FAX data is used as file data in storage (ST68). If confidentiality designation is not detected, the received FAX data is not determined as a confidentiality-designated document (NO in ST64), and stored in the HDD 35 where the data can be freely accessed (ST70). Note that detection of confidentiality designation data included in FAX data of the transmission source, various determinations (data identification), and the like are performed by the system CPU 31.

In the above embodiment, processing of data received by the FAX unit 39 has been described. However, the multifunction digital copying machine of the present invention is not limited to this. For example, received data can be distinguished for each interface. That is, data received by the FAX unit, data received by the scanner unit 13, and the like can be distinguished from each other, and their output destinations can be designated.

This setting is setting No. 5 shown in FIG. 6, in which the condition is data set by the scanner 13, and the output destination is set to another digital data copying machine 63 connected to the LAN 41.

Detailed examples of the present invention are not limited to the case of the FAX, as a matter of course. For example, it is also effective for data read by the scanner to set different transfer destinations in accordance with the data mode. That is, data read in the character mode can be set to be stored in an internal memory (e.g., an HDD) without performing compression processing, and data read in the photographic mode can be set to be stored in a page memory upon compression.

As has been described above, according to the present invention, there can be provided a data processing apparatus and a multifunction image forming apparatus which can distinguish, of received data, data (data file) which meet conditions set by the user in advance, from the remaining data.

For example, a specific FAX number is set as a condition, and FAX data corresponding to this condition is designated to be output to the user's personal computer. With this setting, when FAX data having the corresponding FAX number is received, this FAX data is automatically transmitted to the user's personal computer. As a result, a cumbersome operation of retrieving necessary data from an enormous amount of data can be omitted. In addition, the user need not wait at the FAX unit (multifunction image forming apparatus in this case) until a FAX is received.

## Claims

1. A data processing apparatus comprising:
means (13, 39) for receiving data from an external device;
means (31a, FIG. 6) for setting a first condition to specify the data received by the receiving means into a plurality of types;
means (31a, FIG. 6) for setting a second condition to specify a plurality of transmission destinations corresponding to the plurality of types;
first specifying means (31, 31a) for specifying a type of the received data on the basis of the first condition;
second specifying means (31, 31a) for specifying a transmission destination on the basis of the second condition in accordance with the type specified by the first specifying means; and
means (40, 41) for transmitting the received data in accordance with the transmission destination specified by the second specifying means.

2. An apparatus according to claim 1, further comprising:
means (40, 65) for forming an image on a medium on the basis of the received data.

3. An apparatus according to claim 1, further comprising:
means for storing the received data transmitted from the transmitting means in a storage area (35, 38).

4. An apparatus according to claim 1, characterized in that the first specifying means includes:
third specifying means (31, 31a) for reading header data of a FAX received by the receiving means, and specifying a type of the data on the basis of the header data and the first condition.

5. An apparatus according to claim 4, characterized in that the third specifying means includes:
means for identifying an overseas FAX number and a domestic FAX number, and performing processing with respect to the received data of an overseas FAX, the processing being different from processing to be performed with respect to the received data of a domestic FAX.

6. An apparatus according to claim 4, characterized in that the third specifying means includes:
means for identifying a FAX number of a predetermined country and a FAX number of another country, and performing processing with respect to the received data of a FAX from the predetermined country, the processing being different from processing to be performed with respect to the received data of a FAX from the another country.

7. An apparatus according to claim 1, further comprising:
first detecting means (31, 31a) for reading header data of a FAX received by the receiving means, and detecting an overseas FAX on the basis of the header data and the first condition;
second detecting means (31, 31a) for reading header data of a FAX received by the receiving means, and detecting a domestic FAX on the basis of the header data and the first condition;
means (40, 65) for forming an image on the basis of the received data of the overseas FAX detected by the first detecting means; and
means (35, 38) for storing, in a storage area, the received data of the domestic FAX detected by the second detecting means.

8. An apparatus according to claim 1, characterized in that the first specifying means includes:
means for reading header data of a FAX received by the receiving means, detecting a FAX having a designated FAX number, and performing processing with respect to the received data having the designated FAX number, the processing being different from processing to be performed with respect to the received data of other FAXs.

9. An apparatus according to claim 1, characterized in that the first specifying means includes:
means for reading header data of a FAX received by the receiving means, and detecting a FAX having a designated FAX number; and
means for transferring the received data having the designated FAX number to an external computer connected to the data processing apparatus.

10. An apparatus according to claim 1, characterized in that the first specifying means includes:
means for reading header data of a FAX received by the receiving means, detecting a FAX as a confidential document, and performing processing with respect to the received data of the FAX as the confidential document, the processing being different from processing to be performed with respect to the received data of other FAXs.

11. An apparatus according to claim 1, characterized in that the first specifying means includes:
means for reading header data of a FAX received by the receiving means, and detecting a FAX as a confidential document; and
means for storing the received data of the FAX as the confidential document in a storage area where the received data of a FAX other than the FAX as the confidential document is not stored.

12. An apparatus according to claim 1, characterized in that the receiving means includes:
means (13) for scanning and receiving image data of an original.

13. An apparatus according to claim 12, further comprising:
means for transferring the image data received by the scanning means to an image forming apparatus (65) connected to the data processing apparatus.

14. An apparatus according to claim 1, further comprising:
means (13) for scanning and receiving image data of an original;
means (31, 31a) for identifying the image data received by the scanning means as character data or photograph data; and
means (31, 31a) for performing different processing with respect to the image data in accordance with whether the image data is the character data or the photograph data.

15. An apparatus according to claim 1, further comprising:
means (13) for scanning and receiving image data of an original;
means for identifying the image data received by the scanning means as character data or photograph data; and
means for storing the image data in a different storage area in accordance with whether the image data is the character data or the photograph data.
